Europäisches Patentamt

European Patent Office

Office européen des brevets

(11) Publication number: **0 055 856**

A2

## (12) EUROPEAN PATENT APPLICATION

(21) Application number: **81110823.2**

(22) Date of filing: **29.12.81**

(51) Int. Cl.³: **H 02 P 7/62**
**G 05 F 1/70, H 02 P 7/00**

(30) Priority: **07.01.81 US 222962**
**03.03.81 US 239908** -

(43) Date of publication of application:
**14.07.82 Bulletin 82/28**

(84) Designated Contracting States:
**AT BE CH DE FR GB IT LI LU NL SE**

(71) Applicant: **Pascente, Joseph E.**
**71 Regent Drive**
**Oak Brook Illinois 60521(US)**

(72) Inventor: **Pascente, Joseph E.**
**71 Regent Drive**
**Oak Brook Illinois 60521(US)**

(74) Representative: **Leiser, Gottfried, Dipl.-Ing.**
**Patentanwälte Prinz, Bunke & Partner Ernsberger**
**Strasse 19**
**D-8000 München 60(DE)**

(54) Power factor control systems for polyphase induction motors.

(57) Improved power factor control systems for polyphase induction motors operate the same at improved efficiencies. In one embodiment, voltages applied across each of the three motor windings are uniformly and sequentially phase controlled, and in another are applied in phase controlled fashion across only two of the three windings. In other embodiments, where the motor is always lightly loaded full sine waves of voltage are initially applied across all of the windings during motor startup, whereafter phase control is exercised over only two of the windings and the third is disconnected, while for motors which are usually lightly loaded, but may occasionally be subjected to heavier loads, power is selectively connected to the third winding in accordance with motor load conditions. To prevent motor instability when significant phase angle control is exercised over the winding voltages, it is also contemplated that the winding voltages be sequentially, cyclically and unevenly phase controlled to operate the motor in an unbalanced condition.

FIG. 3.

DESCRIPTION

This application is a continuation-in-part of applic-
ation Serial No. 222,962, filed January 7, 1981.

Background of the Invention

The present invention relates to power factor control
systems for induction motors, and in particular to
improved power factor control systems for polyphase
induction -motors.

In conventional use of an induction motor, the full
sine wave of voltage is maintained across the motor
winding regardless of motor loading conditions. In
situations where the load varies within wide limits, for
example where the motor is connected to a load through
an intermittently operated clutch, most of the time the
motor is operated at considerably less than full rated
load. In such cases, iron losses in the stator are substantially the same when the motor operates below full
rated load as when the motor operates at full rated load,
and relatively large currents flow despite the fact that
little mechanical work is being performed. Consequently,
$I^2R$ losses occur at all points in the power distribution
system, including the motor windings, even though little
or no mechanical power is delivered by the motor.

The reactive volt amps of an induction motor is high
when the motor is unloaded or partially loaded. For
example, the unloaded current of a single phase induction motor may be about 90% of the rated load current,
and the unloaded current of a three-phase motor may be
about 50% to 60%. of rated load current. These currents
cause heat losses in the motor and in the utilities distribution system, and users of motors with cyclic or minimal loads are often charged for poor power factors of the motors.

Power input to a motor equals VI cos $\theta$, where $\theta$ is the phase angle between motor voltage and current. Because the current reamins high in an unloaded motor, the phase angle between the voltage and current shifts with motor loading conditions. Typically, the current lags the voltage by about $80^{\circ}$ in an unloaded motor and $30^{\circ}$ when the motor is loaded. Consequently, for a motor operating at less than full rated load, power losses may be decreased, and motor efficiency increased, by controlling the phase angle.

One prior art system for controlling the power factors of induction motors is disclosed in U.S. Patent No. 4,052,648. In that system, the phase lag between motor voltage and current is sensed and used to control conduction of a triac, which applies operating voltage to the motor in a manner that causes the motor to run at an improved power factor regardless of load. When the load is reduced, applied motor voltage is reduced to minimize power losses, and as the load increases, applied motor voltage is increased to a proper operating level. The disclosed system, however, is suitable for use only with single phase induction motors, and does not find direct application in controlling the power factors of polyphase induction motors.

Polyphase or three-phase induction motors are widely used in industry. However, and as for a single phase motr, a polyphase motor is often operated at considerably less than full rated load. In such cases the power factor of the motor is low, and significant power losses occur while little or no mechanical work is being done.

One prior technique for improving the operating efficiency of a polyphase motor is disclosed in U.S. Patent No. 4,242,625, and contemplates monitoring motor output shaft speed and progressively phase controlling the winding voltages for shaft speeds in excess of about 95% of synchronous. However, while the technique is more stable than that disclosed in U.S. Patent No. 4,052,648, since it is a complete feedback system which looks at shaft speed which is a direct result of current wave form into the windings, it is relatively complicated and requires modification of the motor, for example by mounting a generator on the shaft to obtain a signal the frequency of which is shaft speed dependent. In addition, the technique does not recognize or compensate for instability of motor operation that results when winding voltages are significantly phase angle controlled and the motor begins to operate as a generator.

Objects of the Invention

An object of the present invention is to provide improved power factor control systems for polyphase induction motors, which may readily be used with conventional motors without motor modification.

Another object is to provide power factor control systems which sequentially and successively phase control voltages applied across motor windings.

A further object is to provide power factor control systems which phase control the voltages across less than all of the motor windings.

Yet another object is to provide power factor control system for a polyphase motor which is always operated at significantly less than full rated load, wherein after motor startup application of voltage across one of the windings is interrupted while the voltages across the other two windings are phase controlled.

A still further object is to provide a power factor control system for a polyphase motor which is normally lightly loaded, but on which increased load demands are occasionally placed, wherein after startup the voltages across two of the windings are phase controlled while the remaining winding either receives full voltage or no voltage in accordance with motor loading.

Yet another object is to provide a power factor control system for a polyphase induction motor, which operates the motor in an unbalanced manner to provide motor stability when the winding voltages are significantly phase controlled.

Summary of the Invention

In accordance with the present invention, there is provided a power factor control system for improving the operating efficiency of a conventional three-phase a.c. induction motor by varying the form and magnitude of input voltages coupled thereto, wherein the motor has three stator windings for being energized by a threephase sine wave voltage source through associated lines and a rotor for being coupled to a load. The power factor control system comprises first and second switching means, each having a control input and being positionable in the lines to respective ones of the first and second stator windings, and the switching means are responsive to signals at their control inputs to couple and uncouple phases of voltage with and from the windings.

Also included is sensing circuit means adapted for connection to the lines for sensing the phase angle between the voltage across and the current through one of the windings as it varies in response to motor loading, and the sensing circuit means has an output for generating a control signal having a value representative of the sensed phase angle. Means couples the sensing circuit means output to the control input to the first and second switching means to control the same in a manner to vary the electrical angle of the phases of voltage from the voltage source which are actually coupled to the windings, such that the sensed phase angle is decreased for values thereof which are greater than an optimum value, whereby the average current supplied to the stator windings from the power source is a function of the actual load on the motor and the operating efficiency of the motor is improved.

In another embodiment a third switching means is placed in the line to the third winding to control the phase of voltage applied thereacross. Also contemplated is inhibiting operation of the sensing circuit means during motor startup, so that full power is applied to the motor during startup, whereafter the voltages across two of the windings are phase controlled while voltage is either continuously disconnected from the remaining winding where the motor is always slightly loaded, or is normally disconnected from across the remaining winding but is connected in response to increased motor loading. It is additionally contemplated that the sensing circuit means be operated to control the switching means in a manner to sequentially and cyclically, in response to each cycle or half cycle of the voltages, vary by a first amount the electrical angle of the phases of voltage which are coupled to two of the windings and to vary by a second and less amount the electrical angle of the phase of voltage which is coupled to the remaining winding, whereby each winding, cyclically in turn, has the phase of voltage which is coupled thereto phase controlled by an amount which is less than the phase control exercised over the phases of voltage coupled to the remaining two windings, so that the motor is operated in an unbalanced condition for improved motor stability.

The foregoing and other objects, advantages and features of the invention will become apparent upon a consideration of the following detailed description, when taken in conjunction with the accompanying drawings.

Brief Description of the Drawings

Fig. 1 is a schematic representation of a prior art power factor control circuit for a single phase induction motor;

Fig. 2 is a graph of signal waveforms that occur at various points in the circuit of Fig. 1;

Fig. 3 is a schematic representation of a power factor control system for a wye connected polyphase induction motor in accordance with one embodiment of the invention, wherein the voltages across all of the motor windings are sequentially phase controlled;

Fig. 4 is a schematic representation of another embodiment of power factor control system for a wye connected motor, wherein the voltages across only two of the motor windings are phase controlled;

Fig. 5 shows a further embodiment of power factor control system, for use with a wye connected motor that is substantially continuously operated at less than full rated load;

Fig. 6 shows a time delay circuit, of a type which may be used in the circuit of Fig. 5;

Fig. 7 illustrates an embodiment of power factor control system for use with a wye connected motor which is normally operated at less than full rated load, but which is occasionally subjected to an increased load;

Fig. 8 shows an embodiment of power factor control system for operating a wye connected polyphase motor in an unbalanced manner and for maintaining motor stability even under the condition of significant phase angle control of the winding voltages;

Fig. 9 is a chart illustrating a typical mode of operation of a motor by the circuit of Fig. 8;

Fig. 10 shows an alternate embodiment of power factor control system for operating a wye connected polyphase motor in an unbalanced condition;

Fig. 11 shows an alternate embodiment of time delay circuit which may be used in place of the circuit of Fig. 6;

Fig. 12 is a schematic representation of wye connected windings of a polyphase motor;

Fig. 13 is a schematic representation of an analog phase shift circuit;

Fig. 14 is a schematic representation of a digital phase shift circuit;

Fig. 15 is a schematic representation of delta connected windings of a polyphase motor;

Fig. 16 is a schematic representation of a power factor control system for a delta connected polyphase induction motor in accordance with one embodiment of the invention, wherein the voltages across the motor windings are phase controlled;

Fig. 17 shows a further embodiment of power factor control system, for use with a delta connected motor that is substantially continuously operated at less than full rated load;

Fig. 18 illustrates an embodiment of power factor control system for use with a delta connected motor which is normally operated at less than full rated load, but which is occasionally subjected to an increased load;

Fig. 19 shows an embodiment of power factor control system for operating a delta connected polyphase motor in an unbalanced manner and for maintaining motor stability even under the condition of significant phase angle control of the winding voltages;

Fig. 20 shows an alternate embodiment of power factor control system for operating a delta connected polyphase motor in an unbalanced condition;

Figs. 21 and 22 show further embodiments of power factor control systems for use with wye connected motors which often are operated at less than full rated load, but which are occasionally subjected to increased loads; and

Figs. 23, 24 and 25 are charts illustrating operation of a motor by the circuits of Figs. 8 or 19.

## Detailed Description

### Prior Art

Induction motors have to be designed to have high flux density for good performance when operating at full load. Unfortunately, magnetizing losses associated with high flux density cause significant power losses when the motors operate at less than full load. As is known, magnetizing losses of a motor may be reduced by decreasing motor operating voltage when the load is reduced, or by controlling the power factor of the motor. One prior system for controlling the power factor of a single phase induction motor is described in U.S. Patent No. 4,052,648, the teachings of which are specifically incorporated herein by reference.

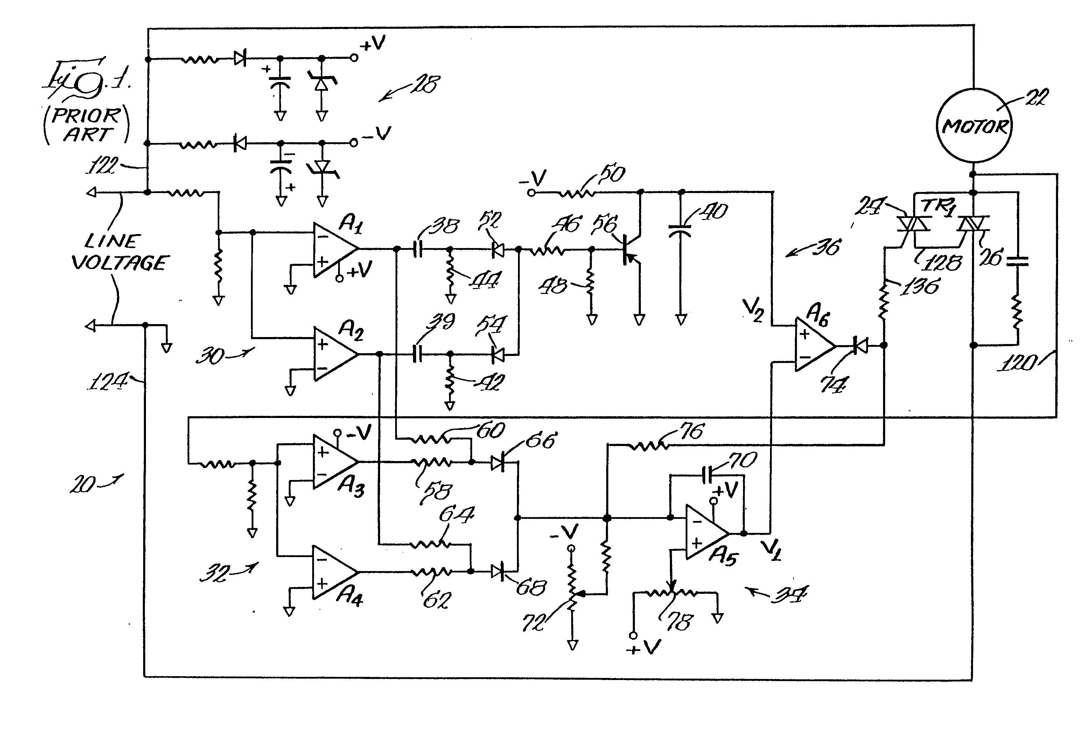

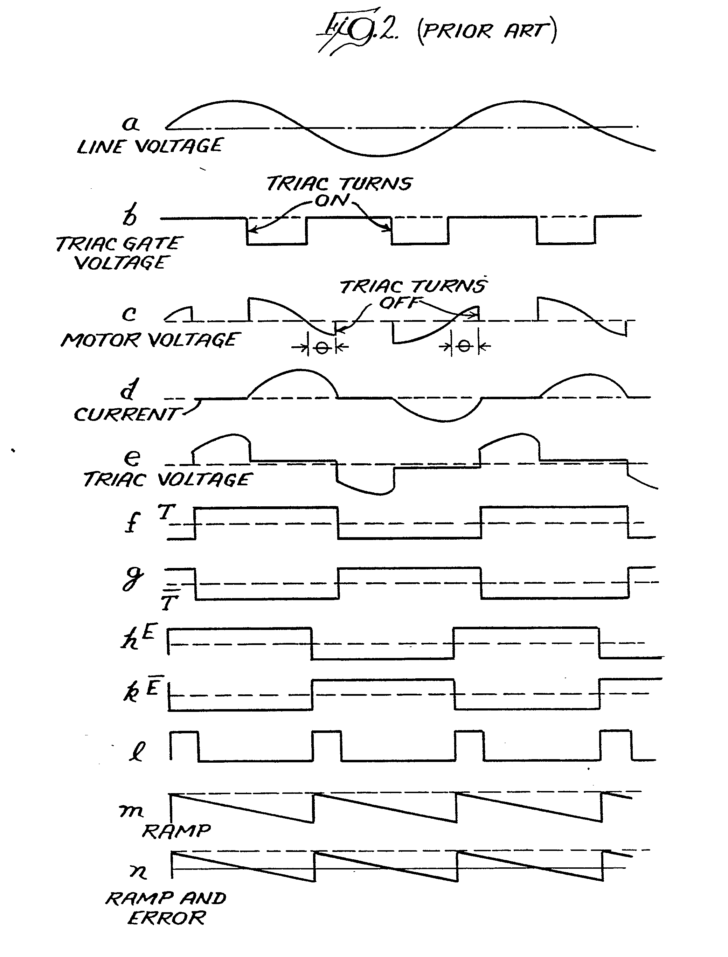

Another known power factor control system for single phase induction motors is illustrated in Fig. 1 and indicated generally at 20, and waveforms of signals generated thereby are shown in Fig. 2. Since the current remains high in an unloaded motor, the phase angle or lag between motor voltage and current increases with decreases in load, and the circuit continuously monitors motor loading by sensing the phase angle. The sensed phase angle is then used to control a triac or a pair of silicon controlled rectifiers in series with the motor winding, in a manner to force the phase angle to an improved value.

In operation, the circuit controls application of line voltage across a single phase induction motor 22 through a pair of triacs 24 and 26 to improve the power factor of the motor and its operating efficiency. The triacs are gated on by negative going pulses (Fig. 2(b)) at the gate of the triac 24, and at the instant of turn on the current through the motor (Fig. 2(d)) begins to rise slowly due to the inductance of the motor windings. The current peaks and follows the motor voltage (Fig. 2(c)) down but with a finite lag, and reaches zero after the voltage goes through zero. The time between the zero crossing of the voltage and the zero value of the falling edge of the current is the phase angle or lag which is sensed and controlled, and is shown as $\theta$ in Fig. 2(c).

Although the gate voltage of the triac 26 is zero at the zero crossing of the line voltage (Fig. 2(a)), the triac remains conductive until the current goes to zero, as shown in Fig. 2(e). When the triac 26 is off, the voltage across it follows the line voltage, and when the triac is on the current through it causes a voltage drop across the triac of about 1 volt and of the same polarity as the current. Consequently, the voltage across the triac 26 contains the necessary information to measure the phase angle of the current relative to the line voltage.

In particular, the power factor controller (PFC) circuit 20 includes a power supply, indicated generally at 28, connected with line voltage for providing operating voltages to the circuit elements, and a zero voltage detecting circuit 30, which includes a pair of operational amplifiers or op amps A1 and A2. Also included a zero current detection circuit 32, having a pair of op amps A3 and A4, an integrator circuit 34, which includes an op amp A5, and a ramp generator 36, having capacitors 38, 39 and 40, resistors 42, 44, 46, 48 and 50, diodes 52 and 54 and a pnp transistor 56.

Inputs to the op amps A1 and A2 of the zero voltage detecting circuit 30 are connected with line voltage, whereby the voltage and its inverse are squared at the outputs from the op amps as indicated by E and $\bar{E}$ in Figs. 2(h) and 2(k). Inputs to the op amps A3 and A4 of the zero current detecting circuit 32 are connected with the voltage across the triac 26, whereby the voltage and its inverse are squared at the outputs from the op amps as shown by T and $\overline{T}$ in Figs. 2(f) and 2(g), respectively. The waveforms T and $\overline{E}$ are simultaneously positive only during the intervals indicated by the phase angle $\theta$ for the positive half cycles of current, and the waveforms $\overline{T}$ and E are simultaneouly positive only during the intervals indicated by $\theta$ for negative half cycles of current.

A voltage proportional to the aforementioned intervals, and therefore to the phase angle, is obtained by summing the voltage waveforms T, $\overline{T}$, E and $\overline{E}$ through four resistors 58, 60, 62 and 64 and two diodes 66 and 68. The voltages T and $\overline{E}$ are applied through the respective resistors 58 and 60, such that the voltage at the juncture of the resistors sums to zero when the polarities of the voltages are opposite and is rejected by the diode 66 when the polarities of the voltage are negative. However, when the voltages T and $\overline{E}$ are both positive, they are summed at the juncture of the resistors and passed through the diode 66. The voltages $\overline{T}$ and E are applied to the respective resistors 62 and 64, are summed at the juncture of the resistors, and rejected or passed by the diode 68 in a similar manner. The sum of the voltages at the juncture of the cathodes of the diodes provides a feedback signal for controlling the phase angle, and the current flow resulting from the summation of voltages is shown in Fig. 2(1).

The feedback voltage at the juncture of the diodes 66 and 68 is applied as an input to the op amp A5 of the integrator circuit 34, which operates as a low pass filter by virtue of a capacitor 70. The voltage at the slider of a potentiometer 72 is also applied as an input to the op amp A5, whereat it is negatively summed with the feedback voltage. The op amp A5 amplifies the difference between the two voltages and generates at its output a voltage V1 which is the error voltage for controlling the turn on point of the triacs 24 and 26.

The error voltage V1 is applied as one input to a comparator op amp A6, the other input to which receives a ramp voltage V2, shown in Fig. 2(m), from the ramp generator circuit 36. The voltage V2 is synchronized with the line voltage, such that its vertical reset coincides with the zero crossing of the line voltage. When the error signal V1 intersects the ramp voltage V2, as shown in Fig. 2(n), the output from the op amp A6 becomes negative and turns on the triac 24, as shown in Fig. 2(b). A diode 74 blocks positive outputs of the op amp A6 from the triac, and allows only negative outputs to be applied to the triac gate. Consequently, the phase angle $\theta$ may be controlled by the setting of the potentiometer 72, and the op amp A5 varies the turn on point of the triac in a manner to force the phase angle to remain at an improved value irrespective of changes in motor loading.

It is the purpose of the circuit to improve the power factor of and to save energy in single phase induction motors. An idling motor can be operated at a much smaller phase angle than a loaded motor. By operating an idling motor at the smallest possible phase angle, the greatest energy savings will be achieved. However, if a small phase angle is commanded to achieve maximum savings, the motor will stall when heavily loaded. Consequently, a compromise must be reached between achieving maximum energy savings and obtaining good full load capability.

For the purpose, a resistor 76 is connected between the input to the op amp A5 and the anode of the diode 74 to provide positive feedback for greater no load savings without sacrificing full load performance. If the potentiometer 72 is set to provide a greater negative voltage the system runs the motor at a larger phase angle, which results in a wider firing angle for the triacs and more voltage being applied to the motor. The diode 74 passes only negative outputs from the op amp A6, which have an increasing duration as the load increases. A portion of this voltage is applied through the resistor 76 to the input to the op amp A5, so that a small phase angle can be commanded at no load to obtain maximum savings, while at the same time the phase angle increases with motor loading  because of the increasing feedback to the input to the op amp. The op amp filters the feedback voltage in the same manner as it does the voltages at the juncture of the diodes 66 and 68 and from the potentiometer 72, and a potentiometer 78 (not prior art) at the other input to the op amp A5 may be provided and adjusted so that the phase angle is never less than $90^{\circ}$.

The Invention

As above described, the prior art power factor control system illustrated in Fig. 1 is suitable for direct use only with single phase induction motors. It is known, however, that the phase angle between voltage and current in one winding of a polyphase induction motor is representative of that in the other windings. With this in mind, the invention contemplates using a power factor controller for a single phase induction motor, which may be of the type shown in Fig. 1 or any other suitable circuit, in a system which permits power factor control of a three-phase induction motor.

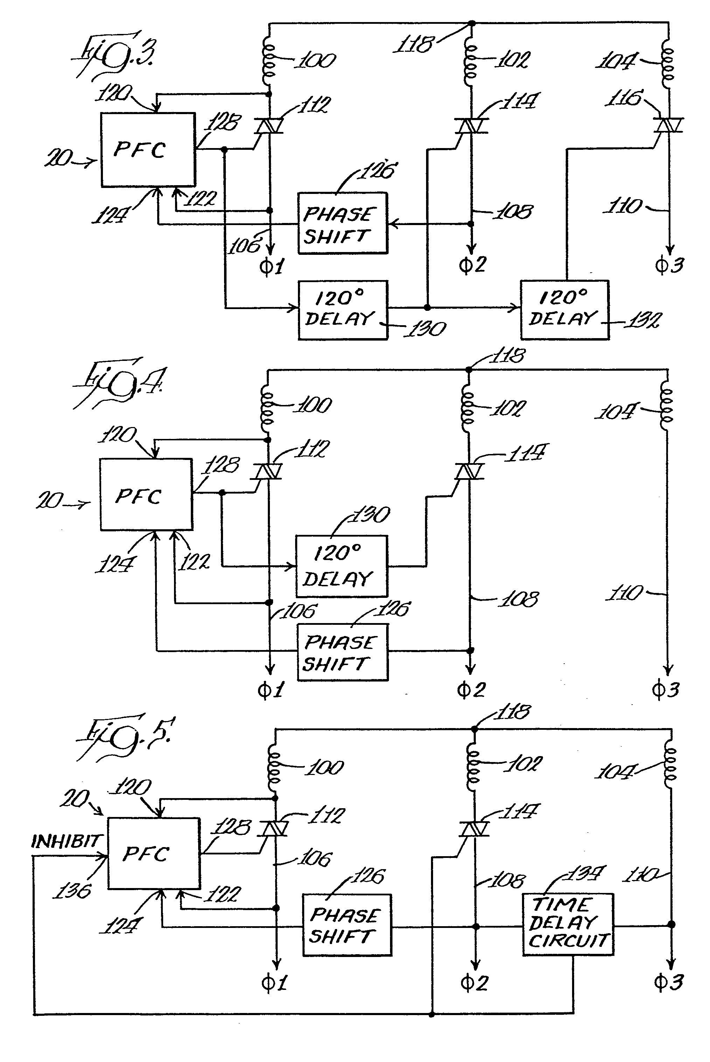

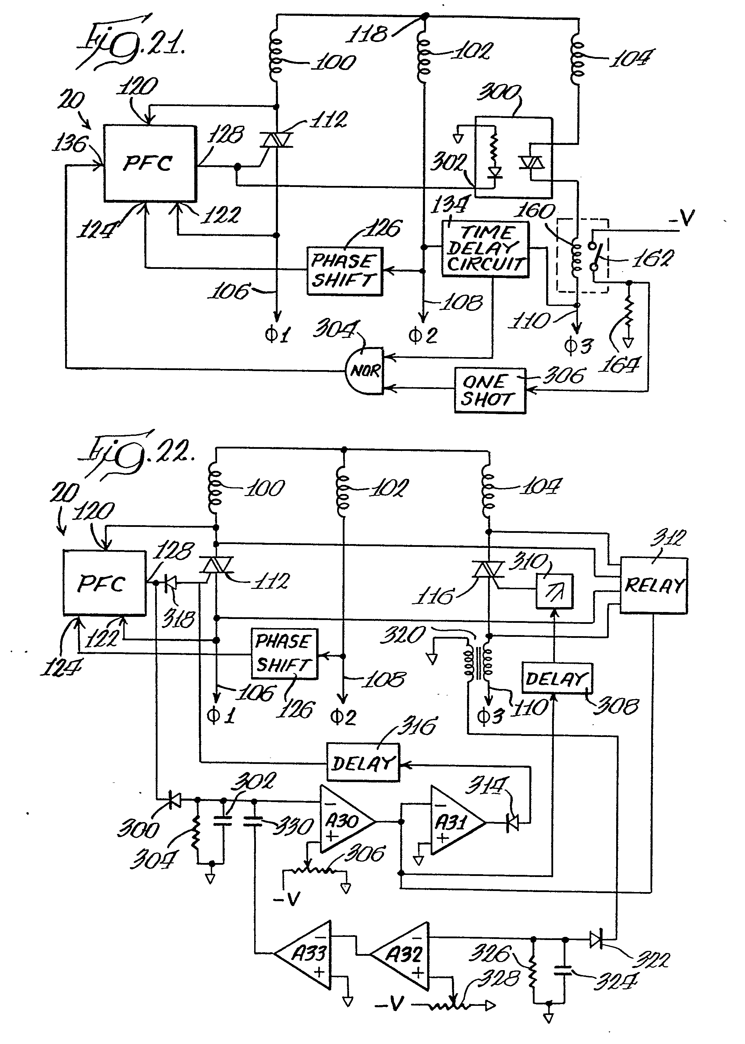

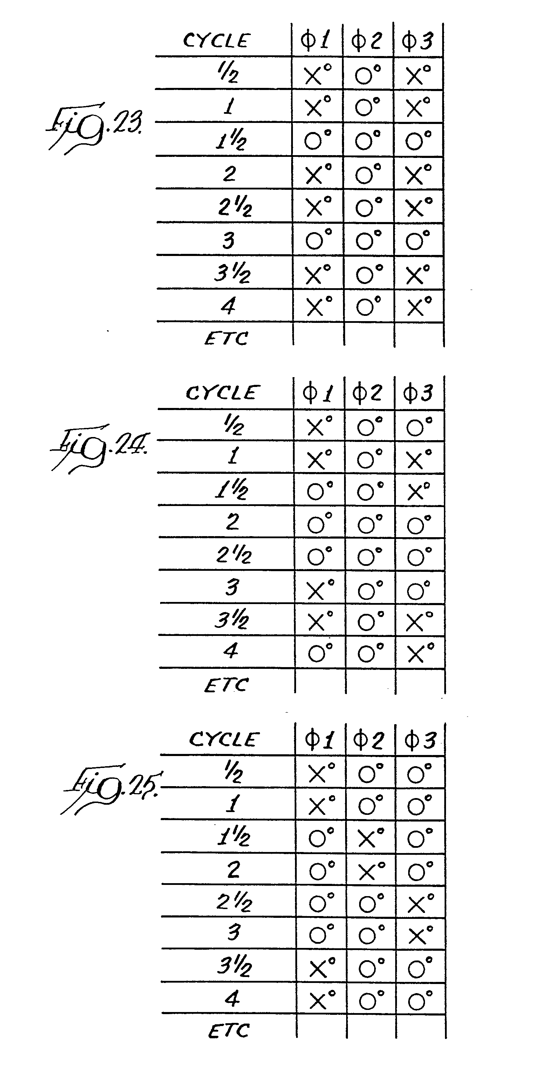

Fig. 3 shows one embodiment of the invention, in which a power factor control (PFC) circuit 20, which for the purpose of describing the invention is of a type as shown in Fig. 1, is used in a system for controlling the power factor of a conventional wye connected three-phase induction motor having first, second and third stator windings 100, 102 and 104, each of which is connectable with a three-phase a.c. power source by means of lines 106, 108 and 110, to energize the windings and effect rotation of a rotor (not shown) of the motor. The system includes triacs 112, 114 and 116 in series circuit with respective ones of the lines 106, 108 and 110, which control application of energizing voltages to the stator windings. For the particular arrangement of stator windings shown it is appreciated that the motor is of the 3-wire type, in which the stator windings are internally connected to a common wye point 118, so that only the three lines 106, 108 and 110 extend externally of the motor, and not of the 4-wire type in which a fourth line would be connected to the wye point 118 and brought to exterior of the motor. The wye connection of the windings is shown schematically in a more conventional form in Fig. 12, and as will become apparent and will later be described, the system may also be used to control the power factor of a conventional delta connected three-phase induction motor.

Since the phase relationship θ between the voltage across and current through a single phase of a three-phase motor is substantially the same as for all of the phases control of the motor power factor may be accomplished by sensing the phase relationship between voltage and current for only a single phase of the motor. Thus, a current monitoring input 120 to the PFC circuit 20 is connected to the winding side of the triac 112 to sense a voltage representative of the current flow through the winding. To sense the voltage across the winding 100, a first voltage monitoring input 122 to the PFC circuit is connected to the line side of the triac 112, a second voltage monitoring input 124 to the PFC circuit is connected through a voltage phase shift circuit 126 to the line side of the triac 114 and a triac gate firing output 128 from the PFC circuit is connected with the gate to the triac 112. For an appreciation of the relationship of the inputs and outputs 120, 122, 124 and 128 to the PFC circuit 20 shown in Fig. 1, representative points in the circuit of Fig. 1 have been correspondingly numbered.

The voltage phase shift circuit 126 receives the voltage on the line 108 at its input and phase shifts or delays the voltage at its output. The need to use the circuit 126 may be appreciated if it is considered that the illustrated polyphase motor is of the 3-wire variety. If the motor were of the 4-wire type, such that a fourth wire wereconnected to the wye point 118 and brought to external of the motor, then the PFC circuit input 124 could be connected directly to the fourth wire without need for the circuit 126 and the voltage across the PFC circuit inputs 122 and 124 would equal that across the winding 100. However, and with reference also to Fig. 12, since the illustrated motor is of the 3-wire type and the voltage on the lines 106 and 108 ($V_{AB}$) leads the voltage ($V_{AN}$) across the winding 100 by about $27^O$ for a typical poly-phase induction motor and a 60 Hz voltage source, use of the phase shift circuit results in a shift in the phase of voltage applied to the PFC circuit input 124 and a voltage across the PFC circuit inputs 122 and 124 which is the same as that across the stator winding 100. The advantage of this arrangement is that the system may be connected directly with the external wiring of a 3-wire motor without need to disassemble or modify the motor to connect the input 124 with the wye point 118. It is understood, of course, that since the voltage across the lines 106 and 110 ($V_{AC}$) correspondingly lags the voltage ($V_{AN}$) across the winding 100 by about $53^O$ for a typical polyphase motor, the voltage across the winding 100 could just as readily be monitored by connecting the PFC circuit input 124 with the line 110 through circuitry which provides an appropriate leading phase shift. Also, it is appreciated that the leading and lagging relationships of the voltages are dependent upon the particular operating characteristics of the motor and the frequency of the voltage source so that, for example, if a 50 Hz voltage source were used, the particular phase relationships would change and a larger than $27^O$ leading and smaller than $53^O$ lagging relationship would prevail.

Fig. 13 shows an analog type voltage phase shift circuit of a type which may be used for the circuit 126. The circuit includes a pair of capacitors C1 and C2 connected in series between the line 108 and the PFC circuit input 124 and a resistor R connected between the juncture of the capacitors and the line 106. For the case where a digital PFC circuit is selected for use, Fig. 14 illustrates a type of phase shift circuit which may be used in place of the circuit 126. The circuit includes an op amp A7 connected at its noninverting input with the voltage on the line 106 and at its output with the inverting input to an op amp A8 through a 1.2 millisecond delay circuit. The circuit generates the squared voltage $V'_A$ at the output from the op amp A7 and the squared and delayed voltage $V'_B$ and its inverse $\overline{V}'_B$ at the input to and the output from the op amp A8. The 1.2 millisecond delay represents a $27^O$ phase lead which is typically encountered with a conventional polyphase induction motor and a 60 Hz voltage source, whereby the phase lag between the voltage $V'_A$ and the voltage $V'_B$ and/or $\overline{V}'_B$ represents the voltage across the winding 100.

From the foregoing, it is understood that the PFC circuit 20 monitors the phase angle between the current through and the voltage across the stator winding 100, and applies from its output 128 gate trigger signals to the triac 112 to control conduction of the triac in a manner to improve the operating phase angle of the winding 100. The motor, however, is three-phase, and to control the phase angles between the currents through and the voltages across the stator windings 102 and 104 the gate trigger signals are also applied through a first 120$^{O}$ time delay circuit 130 to the gate of the triac 114, and thence through a second 120$^{O}$ time delay circuit 132 (or from the PFC circuit output through a 240$^{O}$ time delay circuit) to the gate of the triac 116. The delay circuits 130 and 132 may be any conventional circuits which provide a time delay equal to the time required for the sine waves of voltage to go through 120$^{O}$, and since the three phases of voltage are 120$^{O}$ out of phase, the triacs 112, 114 and 116 are each controlled such that the three phases of voltage are each phase angle controlled or switched at the same point. Consequently, the system controls application of operating voltages to the three-phase motor in a manner which improves the power factor of the motor irrespective of motor loading conditions.

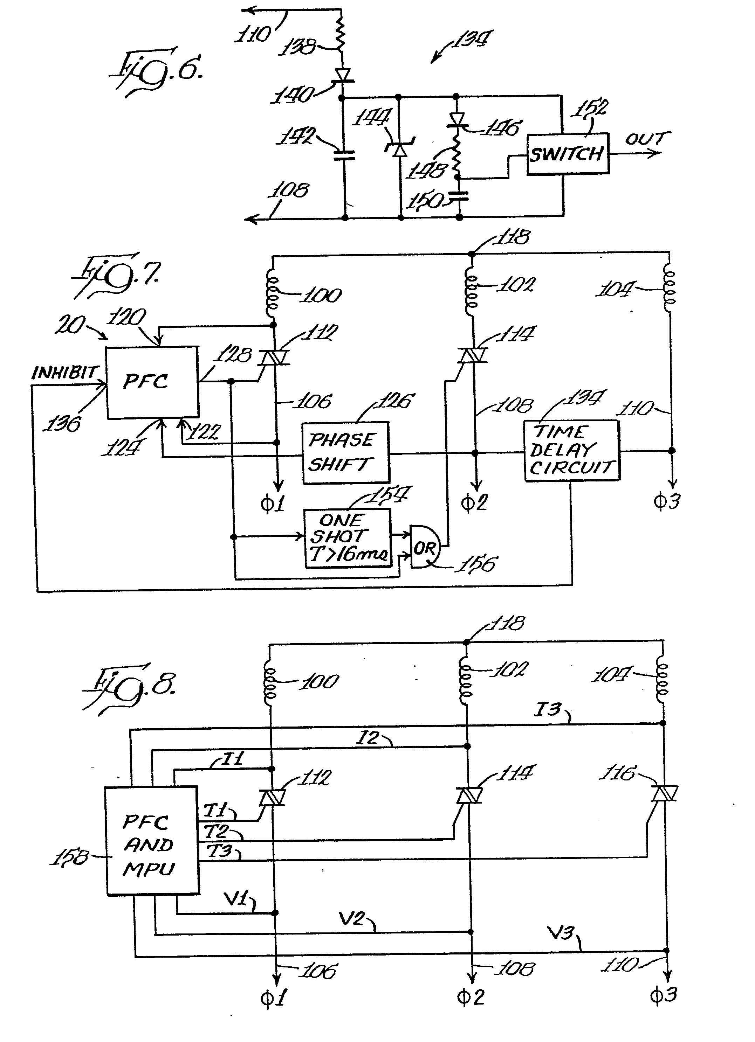

Fig. 4 shows an embodiment of a power factor control system for a polyphase induction motor, which is similar to that in Fig. 3 except that a triac is not in the line to the third phase stator winding 104. However, for the 3-wire induction motor shown the individual stator windings interact with each other in the supply and return of energizing currents, whereby phase control of the voltages across the stator windings 100 and 102 results in control over the current through the winding 104. Thus, this system also results in an improved power factor for a polyphase induction motor for various motor loading conditions.

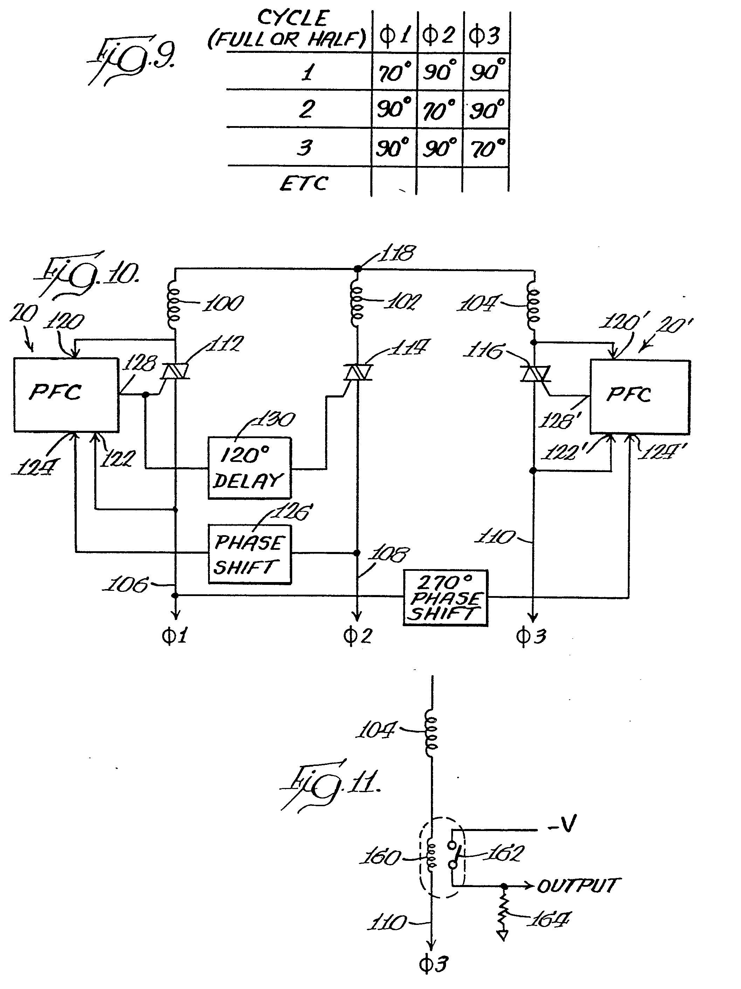

The power factor control system illustrated in Fig. 5 is particularly suitable for use with polyphase motors that always run under relatively limited or at close to no load conditions. In this system, the PFC circuit 20 monitors the phase angle between the current through and the voltage across the first phase stator winding 100 and applies gate trigger signals to the triac 112. The system differs from that of Fig. 4, however, in that a time delay circuit 134 is energized upon application of voltage across the lines 108 and 110, and has an output applied to both the gate of the triac 114 and to an inhibit input 136 to the PFC circuit to control the same so that upon motor startup the triacs 112 and 114 are each conductive for the full sine wave of their associated voltages. This enables full power to be applied to the motor during startup. The interval of the time delay circuit is such that it times out after the motor reaches normal running speed, whereupon its output switches to ground to remove the gate trigger from the triac 114 and the inhibit input to the PFC circuit. This causes the triac 114 to become nonconductive and enables the PFC circuit to control conduction of the triac 112 in .a. manner to improve the power factor of the motor, it being known and understood that a polyphase motor may be operated under limited load conditions with one of its phases disconnected. This embodiment of system, therefore, significantly decreases power losses in a lightly loaded polyphase motor by completely disconnecting one of the phase windings, while at the same time power factor controlling the remaining two phases of the motor. Preferably, for this system the PFC circuit is adjusted, by means of the potentiometer 78, so that not less than 50% of line voltage is applied across the windings 100 and 104. Should a slightly increased load be placed on the motor, the PFC circuit compensates by increasing the voltages across the windings 100 and 104, it being known that a three-phase motor, after startup, can be loaded up to about 50% of its full rated load with one phase removed.

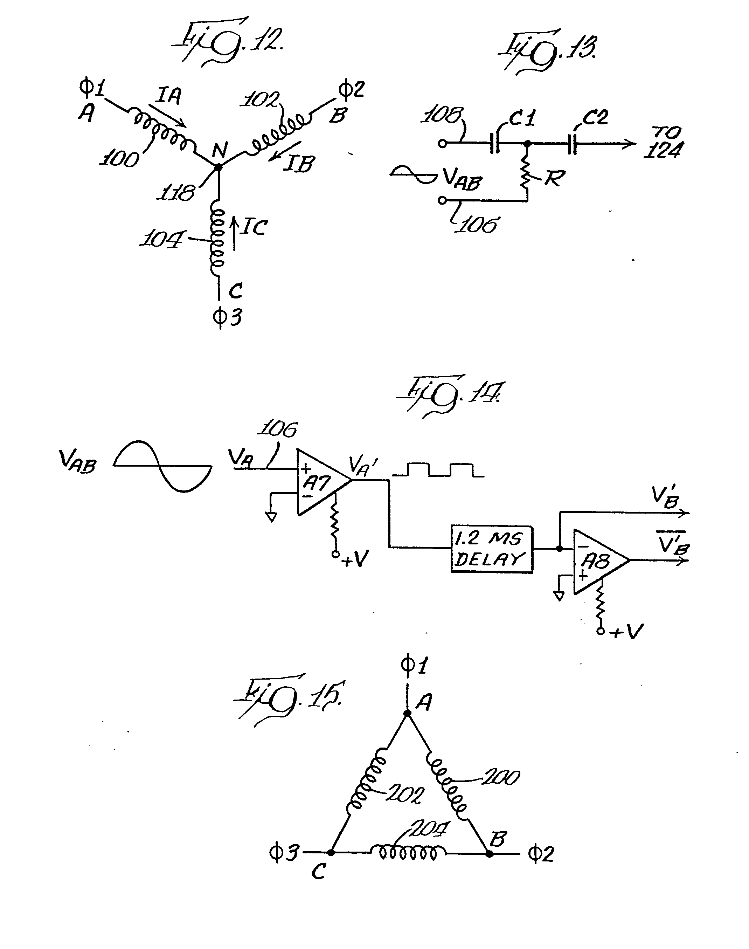

Fig. 6 shows one possible embodiment of time delay circuit 134 that may be used in the system of Fig. 5. The circuit has a resistor 138, a diode 140 and a capacitor 142 in signal at the output 128 is also applied directly to one input to the OR gate 156, and through the one shot circuit 154 to a second input to the OR gate. The timeout interval of the one shot is at least 16 milliseconds, which is the duration of one full cycle of voltage for a 60 Hz voltage source. With zero volts at its input, the output from the one shot is zero volts. However, upon continuous application of a negative voltage at its input for at least 16 milliseconds, the output becomes and remains negative for as long as the voltage at its input remains negative. Thus, about 16 milliseconds after motor turn on and occurrence of a negative signal at the triac gate firing output 128 of the PFC circuit, the output from the one shot becomes negative and the OR gate applies a negative gate trigger signal to the triac 114 to turn on the triac. Consequently, about 16 milliseconds after motor turn on, full line voltage is applied to the motor to enable the motor to reach running speed. As described in connection with the system of Fig. 5, the delay circuit 134 times out after the motor is at running speed, whereupon the PFC circuit is enabled to control conduction of the triac 112, and thereby the power factor of the motor.

If the motor is operated at significantly less than full rated load after startup, the increased phase angle between the current through and the voltage across the stator winding 100 is sensed by the PFC circuit 20, and the signal at its output 128 becomes negative for only a portion of each cycle of the sensed voltage signal. Under this circumstance, the signal is never continuously negative for more than 16 milliseconds and the one shot 154 is never triggered to render the triac 114 conductive, so that the motor operates in the same efficient manner as with the system of Fig. 5. However, should the motor load be increased to the point where the power factor control circuit does not phase back the voltage applied through series across the lines 108 and 110. The diode provides half wave rectification for charging the capacitor, the voltage across which is regulated by a Zener diode 144. A series connected diode 146, a resistor 148 and capacitor 150 are in parallel with the capacitor 142, such that the resistor and the capacitor 150 form an RC circuit. An electronic switch 152 has its input connected with the juncture between the resistor 148 and the capacitor 150, and receives operating voltage from across the capacitor 142. The arrangement is such that when the motor is turned on and voltage appears across the lines 108 and 110, the output from the switch 152, as applied to the gate of the triac 114 and the inhibit input 136 of the PFC circuit, becomes negative until sufficient voltage appears across the capacitor 150, whereupon the output switches to remove the gate trigger from the triac 114 and to enable the PFC circuit to control conduction of the triac 112.

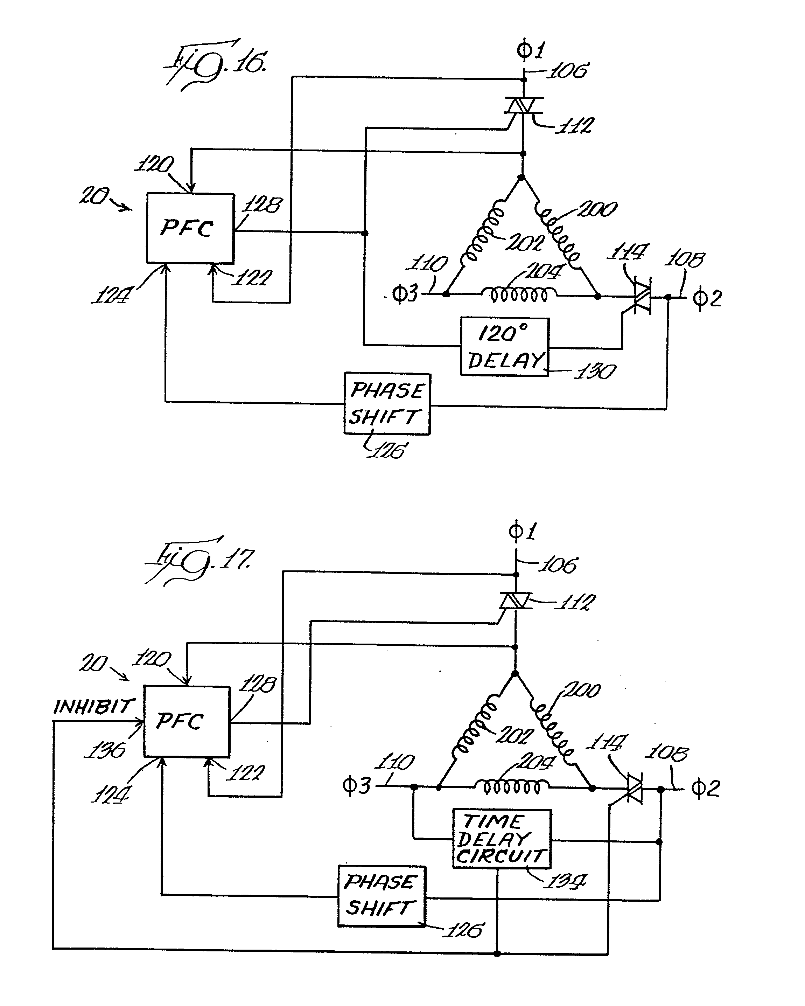

Fig. 7 illustrates a power factor control system for a polyphase induction motor which is somewhat similar to that in Fig. 5, except that the output from the time delay circuit 134 is applied only to the inhibit input 136 to the PFC circuit 20, while the triac 114 receives gate enable pulses from the output 128 of the PFC circuit through a one shot circuit 154 and an OR gate 156. This system operates in much the same manner for a lightly loaded motor as does the system of Fig. 5, although for increased loads on the motor the system applies significantly increased input voltages to the motor.

In operation, upon application of voltage to the motor the time delay circuit 134 initially inhibits the PFC circuit from power factor controlling the winding 100 of the motor, whereby the output 128 from the PFC circuit remains negative and enables the triac 112 to conduct. The

the stator winding 100, at which point its output 128 becomes and remains negative, the one shot circuit 154 and the gate 156 are enabled to apply a gate trigger signal to the triac 114, which renders and maintains the triac conductive. Consequently, in response to increased load requirements, full voltage is applied to the stator winding 102 for proper motor operation. The system of Fig. 7, therefore, economically operates the motor on only two phase windings for light loading conditions, gradually increases the applied power for increasing load conditions and applies full power to all three phases upon the load reaching a selected value.

In power factor controlling three-phase motors, motor instability is observed when the winding voltages are significantly phase controlled, for example to an extent approaching $90^{\circ}$. Under this condition the motor begins to act as a generator since current flow between the windings is opposed, with the result that voltages which are applied across the triacs appear before the gate firing pulses. This results in motor instability, which problem was not previously known since phase firing into a three-phase motor was not known prior to development of power factor control circuits, and there was never a need to do so except for the purpose of "soft starting" a motor. Soft starting circuits for polyphase induction motors may comprise an SCR in parallel with a diode for controlling application of voltages to each winding, and cause half waves of voltage to be applied to the motor. Although circuits having six SCRs may be used for soft starting, circuits having three SCRs offer advantages because polyphase motors cannot be variably voltage controlled on an open loop basis as a result of the inability of stator winding return currents to find a return path for the resulting flux generated, which opposes the balance of stable motor operation. Instability in motor operation when triacs are used to apply voltages to the windings, however, can only be eliminated by application to the windings of either a non-phase controlled sine wave or, in accordance with the invention, unbalanced currents.

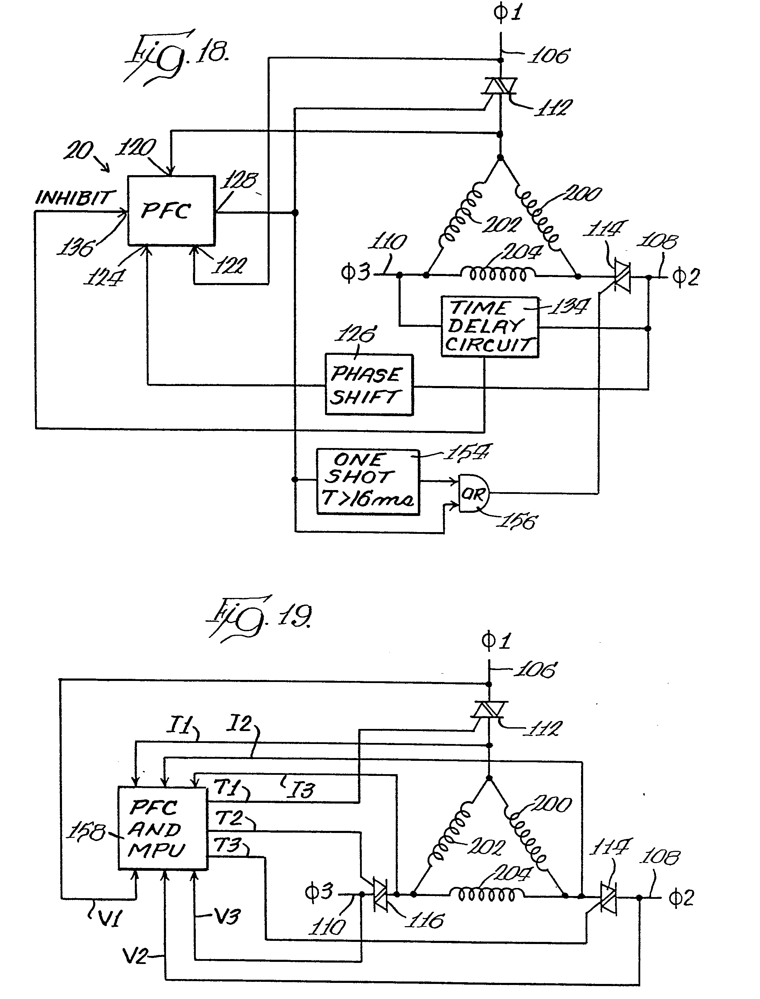

The invention contemplates that a polyphase motor be power factor controlled in an unbalanced manner to obtain stability in motor operation under the condition where significant phase control, for example approaching or equal to $90^{\circ}$, is exercised over the winding voltages. Referring to Fig. 8, there is illustrated in block form a combined PFC and microprocessor (MPU) circuit 158, connected to sense the current flows through the stator windings 100, 102 and 104 of the motor by means of respective conductors I1, I2 and I3. The PFC and MPU circuit is also connected to sense the voltages across the windings by means of respective conductors V1, V2 and V3, and has triac gate firing output conductors T1, T2 and T3 connected with the gates of associated ones of the triacs 112, 114 and 116. The PFC portion of the circuit may be the same as illustrated in Fig. 1, it being understood that, and unlike the system shown in Fig. 3, the phase shifts associated with the sensed currents and voltages, and the delays associated with application of gate trigger signals to the triacs, are accomplished internally of the PFC and MPU circuit 158 by the MPU portion thereof, which may comprise any suitable and conventional microprocessor circuit, such for example as an Intel Corp. Model No. 8022 microcontroller, programmed in a manner as would be apparent to one skilled in the art.

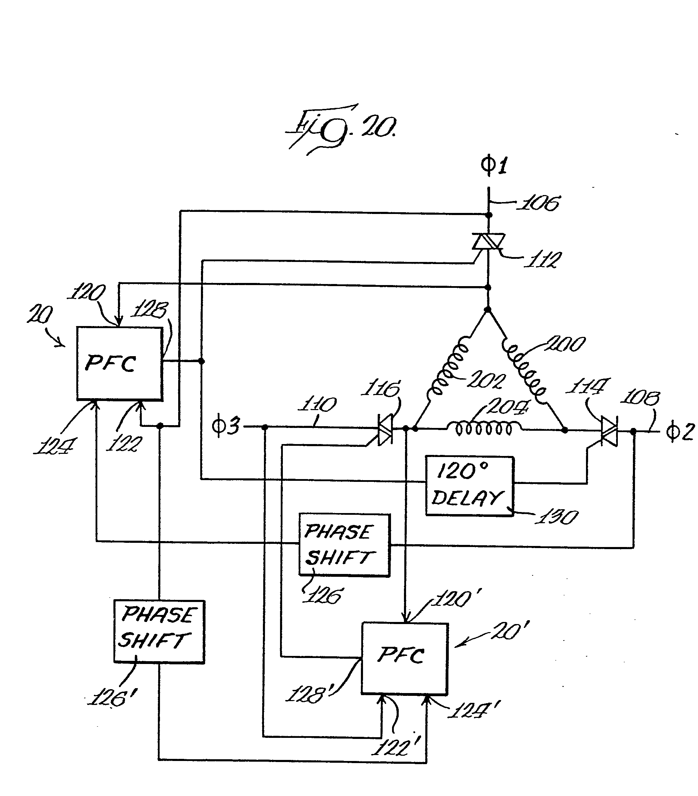

The chart in Fig. 9 illustrates a representative example of unbalanced phase firing or control of motor winding voltages by the system of Fig. 8, which operates the motor in a stable condition while allowing significant power factor correction of the motor. As is seen, when large phase firing angles are required, for example $90°$, during each cycle or half cycle of the voltages two of the phases of voltage are phase controlled at $90°$ while the remaining phase is controlled by a lesser amount, for example $70°$, with the unbalanced firing sequence being sequentially and cyclically rotated so that the individual phases of voltage are sequentially and cyclically phase controlled by the lesser amount. By phase controlling one of the phases of voltage by a lesser angular amount than the other two phases, and by sequentially and cyclically phase controlling the individual phases by the lesser amount, return paths are established for the winding currents, the motor is operated in a stable condition and overheating of any particular one of the windings is avoided.

Fig. 10 illustrates an alternate embodiment of circuit for operating a polyphase induction motor in an unbalanced condition for motor stability, wherein the voltages to two of the motor windings are each phase controlled by identical amounts while the voltage to the remaining winding is phase controlled by a lesser amount. However, and unlike the system of Fig. 8, no means is provided for sequentially and cyclically phase controlling individual ones of the phases of voltage by the lesser amount.

The system of Fig. 10 includes a PFC circuit 20 which, as in the system of Fig. 4, senses the phase relationship between the current through and the voltage across the stator winding 100, and applies gate trigger signals to the triacs 112 and 114 to phase control the first and second phases of voltage. The system also includes a second power factor control circuit 20', which senses the angular phase relationship between the current through and the voltage across the third stator winding 104 and controls conduction of the triac 116 in accordance therewith. The only difference between the PFC circuits 20 and 20' is that the circuit 20 is adjusted, by means of the potentiometer 72, to phase control the voltages through the stator windings 100 and 102 by a greater amount, for a particular sensed voltage/current phase angle relationship, than the circuit 20' phase controls the voltage across the winding 104. The net result is that the system power factor controls the motor in an unbalanced manner, with the voltages across the windings 100 and 102 being phase angle controlled by a greater amount than voltage across the winding 104. Thus, under conditions of significant phase angle control of the voltages, the system operates the motor in a stable condition, although it is appreciated that since cyclic rotation of the unbalanced operating condition does not occur between the voltage phases, the stator winding 104 will experience somewhat greater heat losses than either of the windings 100 and 102.

Fig. 11 shows an alternate embodiment of time delay circuit, which may be used in the systems of Figs. 5 and 7 in place of the time delay circuit 134. As illustrated, the circuit includes a coil 160 in series with one of the motor windings, for example the winding 104, and a normally open reed switch 162. Motor startup current is significantly greater than motor running current, and the arrangement is such that upon application of power to turn on the motor sufficient current flows through the stator winding 104 and the coil 160 to close the reed switch and apply a negative voltage at the output from the circuit to the inhibit input to the PFC circuit 20 and the gate of the triac 114 in the system of Fig. 5, or to only the inhibit input to the PFC circuit in the system of Fig. 7. Then upon the motor reaching running speed, insufficient current flows through the coil 160 to maintain the reed switch closed, whereupon the switch opens and zero volts occurs at the output from the circuit through a resistor 164. Obviously, any other type of motor start current/run current monitoring means may be used to determine when all or less than all of the stator windings are to receive operating voltage, such for example as a Hall effect device or an operational amplifier connected to sense a voltage which varies in accordance with stator winding current.

The embodiments of power factor control systems thus far described have been concerned with improving the efficiencies of wye connected three-phase motors. However, the invention also contemplates that delta connected polyphase motors be power factor controlled, for example a motor having three stator windings 200, 202 and 204 connected as shown in Fig. 15.

Fig. 16 is the counterpart of the system in Fig. 4 for a wye connected motor, and shows a power factor control system for a delta connected three-phase induction motor, in which a PFC circuit 20, of the type in Fig. 1, is used in the system to control operation of a conventional delta connected motor having first, second and third stator windings 200, 202 and 204. Since the power factor control systems for delta connected motors are the same as those for wye connected motors, like reference numerals have been used to denote like system elements. Thus, the windings are connectable with a three-phase AC power source by means of lines 106, 108 and 110 to energize the windings and effect rotation of a rotor (not shown) of the motor, and triacs 112 and 114 are in series circuit with respective ones of the lines 106 and 108 to control application of energizing voltages to the windings.

The phase relationships between the voltages across and the currents through the individual windings of a delta connected three-phase motor are substantially identical, so that control of the motor power factor may be accomplished by sensing the phase relationship between the voltage across and current through only a single winding. Accordingly, the current monitoring input 120 to the PFC circuit 20 is connected to the winding side of the triac 112 to sense a voltage representative of the current flow through the triac. To sense the voltage across one of the windings, for example the winding 200, the first voltage monitoring input 122 to the PFC circuit is connected to the line or voltage source side of the triac 112 and the second voltage monitoring input 124 to the PFC circuit is connected through a voltage phase shift circuit 126 to the line side of the triac 114, and the triac gate firing output 128 from the PFC circuit is connected to the gate of the triac 112 and through a $120^{\circ}$ time delay circuit 130 to the gate of the triac 114.

The voltage phase shift circuit 126 receives the voltage on the line 108 at its input and phase shifts or delays the voltage at its output. The need for use of the circuit 126 may be appreciated if it is considered that the voltage across the winding 200, for the delta connection shown, is the actual voltage across the winding, but the current through the triac 112 lags the voltage across the winding 200 by about $27^{\circ}$ for a typical polyphase induction motor and a 60 Hz voltage source. Consequently, the phase shift circuit results in the application of voltages at the inputs to the PFC circuit which represent the correct phase relationship between the voltage across and the current through the winding 200 for proper control of the triacs 112 and 114. It is understood, of course, that depending upon the particular operating characteristics of the motor, or if a 50 Hz voltage source were used, the particular phase relationship would change.

From the foregoing, and it being understood that the voltage phase shift circuit 126 may be of the type illustrated and described in respect of Fig. 13 (or Fig. 14 for a digitally implemented system), it is appreciated that the PFC circuit 20 monitors the phase angle between the current through and the voltage across the stator winding 200, and applies gate trigger signals at its output 128 to the triac 112 and through the 120° delay circuit 130 to the triac 114 to control conduction of the triacs in a manner to improve the phase angles of the voltages across and the currents through the motor windings, and thereby the power factor and operating efficiency of the motor, irrespective of motor loading conditions.

From the foregoing description of the power factor control system for a delta connected motor as illustrated in Fig. 16 and the counterpart system for a wye connected motor as illustrated in Fig. 4, it is understood that the various embodiments of power factor control systems for wye connected motors are equally suitable for use with delta connected motors, and when ·so used are connected with the motor and operate in the same manner as when used with a wye connected motor. Thus, and without a specific description of the same, it is appreciated that the power factor control system for a delta connected motor as shown in Fig. 17 is the counterpart of the system in Fig. 5 for a wye connected motor, the system in ·Fig. 18 is the counterpart of the system in Fig. 7, the system of Fig. 19 finds. its counterpart in the system of Fig. 8 and the system of Fig. 20 has its counterpart in the system of Fig. 10.

Another embodiment of power factor control system is shown in Fig. 21, wherein for light loading conditions the motor is operated on two phase windings only, i.e., the windings 100 and 102, while in response to increased loading the remaining phase winding 104 is energized to develop a greater power output from the motor. In the system a zero volt relay 300, instead of a triac, is provided to connect line voltage with the winding 104, and has an input 302 connected with the gate trigger output 128 from the PFC circuit 20. The relay is of a type known in the art, and becomes conductive to apply voltage across the winding in response to the simultaneous occurrence of a negative voltage at its input and a zero crossing of the voltage on the line 110.

In operation of the system, upon application of voltage to the motor a negative voltage at the output from the time delay circuit 134 is applied through a NOR gate 304 to the inhibit input 136 to the PFC circuit. This causes the PFC circuit to generate and maintain a negative voltage at its output 128, which is applied to and renders conductive the triac 112 and the relay 300, whereby during motor startup full sine waves of voltage are applied across all of the windings to bring the motor to running speed. A time delay circuit of the type shown in Fig. 11 is in the line 110, and since motor startup current is significantly greater than motor running current, upon motor startup the contact 162 closes to apply a negative voltage to an input to a one shot circuit 306, the output from which is connected as a second input to the NOR gate. In response to a negative voltage at its input, the one shot circuit generates a negative voltage at its output for a duration equal to two or three cycles of voltage, which output is also applied through the NOR gate to the inhibit input to the PFC circuit.

Upon time out of the time delay circuit 134, the inhibit input is removed from the PFC circuit and negative pulses are then generated at its output 128 which have a duration in accordance with the sensed phase angle between the voltage across and the current through the winding 100. Preferably, the PFC circuit is adjusted, by means of the potentiometer 78, so that for light motor loading conditions not less than 50% of line voltage is applied across the windings 100 and 102, whereby the output 128 from the PFC circuit is negative from at least $90^{\circ}$ to $180^{\circ}$ and from at least $270^{\circ}$ to $360^{\circ}$ of the voltage on the line 106. Under this circumstance, and since the phases of voltage on the lines 106 and 110 are $120^{\circ}$ out of phase, the input 302 to the relay 300 is never negative at the time of zero crossing of the voltage on the line 110, the relay remains nonconductive and only the windings 100 and 102 are energized.

Should an increased load be placed on the motor, the PFC circuit compensates by increasing the voltages across the windings 100 and 102, or by providing a negative voltage at its output 128 prior to $90^{\circ}$ and $270^{\circ}$ of the voltage on the line 106. If the load increases sufficiently so that the PFC circuit phase fires the triac 112 at or before $60^{\circ}$ and $240^{\circ}$ of the voltage on the line 106, then a negative voltage will be at the input to the relay at the time of zero crossing of the voltage on the line 110, and the relay will conduct and energize the winding 104.

When the winding 104 is initially energized, sufficient current flows through the coil 160 to close the switch 162 and cause the one shot 306 to apply a negative voltage to the inhibit input 136 to the PFC circuit for at least two or three cycles of the voltage, or for about 32 to 48 milliseconds. The output 128 from the PFC circuit then becomes and remains negative for the time out interval of the one shot, during which time full sine waves of voltage are applied to all of the windings to meet the increased load conditions. If at the end of the time out interval of the one shot circuit the load on the motor is still sufficient, despite energization of the winding 104, to cause phase firing of the triac 112 at or prior to 60° and 240° of the voltage on the line 106, the relay remains conductive and maintains the winding 104 energized. On the other hand, if the load is not sufficient to cause phase firing of the triac at or before 60° and 240° of the voltage on the line 106, then the voltage at the input to the relay will not be negative at the time of zero crossing of the voltage on the line 110 and the relay will become nonconductive and deenergize the winding 104. It is appreciated that the one shot circuit prevents oscillation of the motor under mid-range loading conditions, which would otherwise occur since energization of the winding 104 increases the phase angle between the voltage across and the current through the winding 100.

The embodiment of power factor control system shown in Fig. 22 operates the motor on two windings only, i.e., the windings 100 and 102, for light motor loads, and energizes the remaining winding 104 in response to increased loading. In use of the system, the PFC circuit 20 preferably is adjusted so that not less than 50% of line voltage is applied across the windings 100 and 102 for light motor loading. An inverting input to an op amp A30 connects through a diode 300 with the output 128 from the PFC circuit, and a capacitor 302 in series with a resistor 304 provides a d.c. voltage at the inverting input to the op amp which has a value representative of the duration of the negative voltage pulses generated at the output 128. A noninverting input to the op amp receives negative reference voltage from a slider of a potentiometer 306, and an output from the op amp is connected with an inverting input to an op amp A 31, with the gate of the triac 116 through a delay circuit 308 and an optical coupler 310 and with an input to a relay 312.
The noninverting input to the op amp A31 is connected
with circuit ground, the output from the op amp is
connected through a diode 314 and a delay circuit 316
with the gate to the triac 112 and a diode 318 is between
the output 128 and the gate of the triac.

Under conditions of very light motor loading the PFC
circuit 20 provides negative gate pulses to the triac 112
to reduce the voltage across the windings 100 and 102 to
approximately 50% of line voltage. The negative pulses are
also applied through the diode 300 to generate across the
capacitor 302 a d.c. voltage having a value representative
of the duration of the negative pulses, and therefore of
the amount of phase firing of the triac 112. The potentiometer 306 is adjusted so that for light motor loading the
voltage at the noninverting input to the op amp A30 is
negative with respect to the voltage at the inverting input,
whereby the output from the op amp A30 is negative and the
output from the op amp A31 is positive.

As motor loading increases, the pulses at the output 128 from
the PFC circuit become negative for longer periods of time
to phase fire the triac 112 sooner, and the voltage at the
inverting input to the op amp A30 becomes increasingly more
negative until a point is reached where the output from the
op amp A30 becomes positive and that from the op amp A31
negative. The negative output from the op amp A31 is applied
through the diode 314 and the delay circuit 316 to the triac
112 to maintain the triac on, the delay circuit 316 being
of any conventional type which operates to delay only signals
having a positive going transition, so that the output from
the op amp A31 is immediately applied to the gate of the
triac 112. At the same time, the positive going transition
at the output from the op amp A30 is applied both as an
energizing input to the relay 312 and through the delay circuit 308 and the optical coupler 310 to the gate of the triac 116 to turn on the triac and energize the winding 104. The delay circuit 308 is of any conventional type which operates to delay only pulses having a negative going transition, so that the output from the op amp A30 immediately renders the triac 116 conductive, and the optical coupling circuit 310 isolates the remainder of the circuitry from the high voltages present at the gate of the triac.

The purpose of the relay 312 may now be appreciated. The relay is of a conventional type the energization of which, but not the deenergization, is delayed, and is connected to shunt across the triacs 112 and 116 when it is energized, thereby to carry the currents that would otherwise be carried by the triacs and permit use of triacs having a lower current rating. However, since the application of gate trigger signals to the triacs is not delayed, but energization of the relay is, the triacs become fully conductive before the relay is energized and only the current carrying capability of the relay, and not its voltage switching capability, is of importance, so that a less expensive relay may be used. Consequently, and although the relay could be eliminated and triacs having an increased rating used, use of the relay minimizes the size and costs of the triacs as well as the amount of heat sinking that would otherwise be required.

Upon energization of the winding 104, the PFC circuit 20 phases back, or decreases the duration of, the negative pulses at its output 128 as a result of unloading the motor, and it is then necessary to determine when the load on the motor has decreased sufficiently so that the winding 104 may again be disconnected and the triac 112 phase fired. This is accomplished by sensing the current flow through the winding 104 by means of a circuit including a pair of op amps A32 and A33. A primary winding of a transformer 320 is placed in series circuit with the line 110 and a secondary winding of the transformer is connected with an inverting input to the op amp A32 through a diode 322. The voltage at the secondary winding of the transformer is representative of the current flow through the winding 104 and the diode 322 rectifies the voltage to generate across a capacitor 324 in series with a resistor 326, and at the inverting input to the op amp A32, a negative voltage representative of the current flow through the winding. A noninverting input to the op amp A32 is connected with an adjustable source of negative reference voltage through a slider of a potentiometer 328 and the output from the op amp is applied to the inverting input to an op amp A33. A noninverting input to the op amp A33 is connected with circuit ground and the output from the op amp is connected through a capacitor 330 to the inverting input to the op amp A30.

The potentiometer 328 is adjusted so that when the winding 104 is not energized and no current flows through the line 110, the inverting input to the op amp A32 is positive with respect to the noninverting input, whereby the output from the op amp A32 is negative and the output from the op amp A33 is positive. However, upon energization of the winding 103 a sufficient negative voltage is generated at the inverting input to the op amp A32 to cause the output from the op amp A32 to become positive and the output from the op amp A33 negative. The negative transition at the output from the op amp A33 is applied through the capacitor 330 to the inverting input to the op amp A30, which reinforces the signal thereat.

For as long as the motor is sufficiently loaded, the power factor control system continues to apply full input power to the motor. However, upon the load, and therefore the current flow through the winding 104,decreased to a point whereat the voltage at the inverting input to the op amp A32 becomes positive with respect to the voltage at the noninverting input thereto, as determined by the setting of the potentiometer 328, the output from the op amp A32 becomes negative and the output from the op amp A33 positive. The positive going transition at the output from the op amp A33 is applied through the capacitor 330 to the inverting input to the op amp A30 to cause the inverting input to become positive with respect to the noninverting input, whereby the output from the op amp A30 switches to negative and the output from the op amp A31 to positive to return control over conduction of the triac 112 to the PFC circuit, to remove the gate trigger signal from the triac 116 and to deenergize the relay 312. In this case, however, the delay circuits 308 and 316 are operative to delay removal of the gate trigger signals from the triacs until after the relay 312 has deenergized, whereby again the switching ability of the relay need not be of concern.

Although not specifically described, it is understood that, as for the previously described embodiments of power factor control systems, the systems of Figs. 21 and 22 may just as readily be used with delta connected motors, and when so used would operate in the same manner as described in connection with wye connected motors.

All of the previous embodiments of PFC systems for both wye and delta connected motors are primarily adapted either for motors that are almost always lightly loaded or are almost always relatively heavily loaded. However, a motor often is alternately lightly and heavily loaded, and it is desirable to continuously provide optimum operating efficiency irrespective of load. The invention therefore contemplates a PFC system which accommodates very efficient operation of a motor irrespective of its load.

The system may be similar to that of Fig. 8 for a wye connected motor, or as in Fig. 19 for a delta connection, and includes a microprocessor of a type discussed in respect of those systems, which may readily be programmed to accomplish the functions to be described.

As described, for lightly loaded motors it is desirable, for maximum efficiency, to phase control two windings only of the motor at a significant angle and in an unbalanced manner for motor stability. On the other hand, for efficient operation with heavy motor loads and to prevent motor stall, it is necessary to phase control all of the windings and for full load to apply full winding voltages.

The charts in Figs. 23, 24 and 25 illustrate methods of operation of the PFC systems of Figs. 8 and 19 in a manner accomplishing the foregoing objectives. Fig. 23 shows system operation wherein the second phase of voltage is always on, since it is always triggered on at $0^O$, while half cycles of the first and third phases are intermittently phase controlled at an angle of $X^O$, it being understood that the $X^O$ of phase firing control is determined by the P FC system in accordance with sensed motor loading. As shown in Fig. 24, the second phase of voltage is always phase controlled at $0^O$, while selected ones of the half cycles of the first and third phases are controlled at $X^O$ and the remaining cycles are controlled at $0^O$. As compared with the method shown in Fig.s 23 and 24, in the technique of Fig. 25 all three phases of voltage are controlled in an alternate manner, such taht phase firing control is cyclically exercised over phases 1 and 2, phases 2 and 3 and then phases 1 and 3, with the remaining phase at the time being controlled at $0^O$. To properly appreciate the significance of Figs. 23, 24 and 25, it is understood that the beginning of the first half cycle of phase 1 occurs at any positive going zero crossing point of that voltage phase, and that the beginnings of the first half cycles
of phases 2 and 3 occur $120^{\circ}$ and $240^{\circ}$, respectively after
said reference point, as is the case for a three-phase
voltage.

Accordingly, when operating a motor as illustrated in
any of Figs. 23, 24 and 25, very efficient and stable
operation of the motor at light loads is accomplished
because at any instant in time phase control is exercised
over only two of the motor windings in an unbalanced manner.
At the same time, since the $X^{\circ}$ of control has a value
determined by the PFC system in accordance with sensed
motor load, control may range anywhere from large phase
angle control to $0^{\circ}$, and significant motor efficiency is
obtained from no load to full rated load.

As is known, the power factor of a motor equals the
cosine of the angle between winding voltage and current,
and if the motor is loaded power factor improves, unless
it is loaded to a point whereat it starts to stall, and
the power factor then goes in the opposite direction
because the motor becomes unloaded. From the description
of the  various embodiments of invention, it is understood
that the PFC systems attempt to maintain the same optimum
power factor under any motor load. If the load increases,
the systems increase line voltage applied to the motor to
return to the optimum power factor. However, if the motor
stalls and the power factor decreases, the systems would
decrease line voltage and enhance motor stalling. Thus,
if the systems desirably operate motors at an optimum power
factor, at which point minimum line voltage is applied
across the motor windings, any sudden and significant
load on the motor will cause the motor to go toward a
stall condition and the motor power factor to decrease.
Under that condition, the systems would actually decrease
winding voltages, thus worsening the stall condition.

It is therefore contemplated that, to enable the PFC systems to operate motors at minimum line voltage and optimum power factors, and yet to accommodate sudden motor loads, if any change in motor power factor occurs a positive feedback be provided to the triacs 112, 114 and 116 to turn the triacs fully on. To this end, a microprocessor would be incorporated into the PFC systems of the various embodiments of invention, such for example as in the embodiments shown in Fig.s 8 and 19, and the PFC circuit could function so that the motor could be operated at an optimum power factor, which is the borderline point whereat the motor would otherwise stall with any sudden increase in loading. However, the microprocessor would be programmed, in a manner understood by one skilled in the art, to control the PFC circuit so that upon any sensed change in power factor the circuit causes the triacs to fully conduct, thereby to avoid motor stalling. Immediately thereafter, the microprocessor would operate the PFC circuit to sequentially and incrementally increase the phase firing angle of the triacs, for example at about $0.7^{\circ}$ increments, until the motor again operates at the ideal power factor. Consequently, the PFC systems would be able to operate motors at an optimum power factor without danger of motor stalling.

## CLAIMS

1. A power factor control system for improving the operating efficiency of a three-phase a.c. induction motor by varying the form of input voltages coupled thereto, the motor having first, second and third stator windings for being energized by a three-phase sine wave voltage source through respective first, second and third lines and a rotor for being coupled to a load, said power factor control system comprising first and second switching means positionable in respective ones of the first and second lines, each said switching means having a control input and being responsive to signals at said control input to establish and interrupt a circuit path through its associated line; sensing circuit means adapted for connection to the lines for sensing the phase angle between the voltage across and the current through the stator windings as it varies in response to motor loading, said sensing circuit means having an output for generating a control signal having a value representative of the sensed phase angle; and means for coupling said sensing circuit means output to said control inputs to said first and second switching means to control the same in a manner to vary the electrical angle of the phases of voltage from the voltage source which are actually coupled to the windings through said first and second switching means to decrease the sensed phase angle for values thereof which are greater than an optimum value, whereby the average current supplied to the stator windings from the power source is a function of the actual load on the motor and the operating efficiency of the motor is improved.

2. A system as in claim 1, including a signal delay circuit and a voltage phase shift circuit, said sensing circuit means having a current monitoring input coupled to the winding side of said first switching means; a first voltage monitoring input coupled to the voltage cource side of said first switching means and a second voltage monitoring input coupled through said voltage phase shift circuit to one of the voltage · source side of said second switching means or the third line, said voltage phase shift circuit shifting the phase of the voltage applied to said second voltage monitoring input by an amount such that said sensing circuit means monitors voltage signals representative of the current through and the voltage across the first winding and of the phase angle therebetween, said sensing circuit means output being coupled to the control input to said second switching means through said signal, delay circuit. .

3.    A system as in claim 1, including circuit means coupled with the control inputs to said first and second switching means and responsive upon application of voltage on the lines to apply a signal to said control inputs to render said first and second switching means conductive to couple full sine waves of voltage ·to the first and second lines for a time sufficient to enable the motor to reach normal running speed.

4.    A system as in claim 1, including third switching means positionable in the third line and having a control input coupled to said sensing circuit means output for being controlled in a manner to establish and interrupt a path through the third line, including circuit means for cyclically coupling control signals at said sensing circuit means output with said first, second and third switching means control inputs to control the same in a manner to vary the electrical angle of the phases of voltage which are actually coupled to two windings by a first amount and to the remaining winding by a different amount, whereby the motor is operated in an unbalanced condition for improved operating stability.

5. A system as in claim 13, wherein said circuit means, in response to cycles or half cycles of the voltages, sequentially and cyclically controls said switching means to sequentially and cyclically apply through said first, second and third switching means and to the windings phases of voltage the electrical angle of which is varied by the different amount.

6. A system as in claim 1, including third switching means positionable in the third line and having a control input, and microprocessor circuit means coupled with said sensing circuit means, said microprocessor circuit means and sensing circuit means being coupled at inputs thereto with the winding sides and the voltage source sides of said first, second and third switching means for sensing the phase angles between the currents through and the voltages across the first, second and third windings and having outputs coupled with the control inputs to said first, second and third switching means for applying control signals thereto to control the same to sequentially and cyclically, in response to each cycle or half cycle of the voltages, vary by a first amount the electrical angle of each phase of voltage which is actually coupled to the windings through two of said switching means and to vary by a second and lesser amount the electrical angle of the phase of voltage which is actually coupled to the windings through the remaining switching means.

7. A system as in claim 1, wherein said second switching means is nonconductive in response to said control signal having less than a predetermined value, and including means for rendering said first and second switching means fully conductive in response to said control signal having at least said predetermined value.

8.   A system as in claim 1, including circuit means coupled with said sensing circuit means and responsive to a change in phase angle from the optimum value to sequentially control said sensing circuit means so that it momentarily causes full phases of voltage to be applied across the windings and so that it then successively increments the electrical angles of the phases of voltage coupled to the windings until the sensed phase angle is again decreased to the optimum value.

9.   A method of operation of the system defined in any of the preceding claims to improve the power factor and operating efficiency of a three-phase a.c. induction motor by varying the form of input voltages coupled thereto, the motor having first, second and third stator windings for being energized by a three-phase sine wave voltage source through first, second and third lines and a rotor for being coupled to a load, comprising the steps of sensing the phase angle between the voltage across and the current through the windings as it varies in response to motor loading; generating a control signal having a value representative of the sensed phase angle; and selectively interrupting the circuit paths through the first and second lines in accordance with the value of the control signal to vary the electrical angle of the phases of voltage from the voltage source which are actually coupled to the windings through the first and second lines to decrease the sensed phase angle for values thereof which are greater than an optimum value, whereby the average current supplied to the stator windings from the power source is a function of the actual load on the motor and the operating efficiency of the motor is improved.

10.   A method as in claim 9, wherein said sensing step includes the steps of monitoring the current flow through the first line, monitoring the voltage between the first line and one of the second or third lines, phase shifting the phase of the monitored voltage by an amount such that the phase shifted voltage is in phase with the voltage across the first winding, and comparing the phases of the monitored current flow and the phase shifted voltage, and wherein the step of selectively interrupting includes the step of delaying interruption of the circuit path through the second line after interruption of the circuit path through the first line.

11. A method as in claim 9, including the step of inhibiting operation of said interrupting step for a predetermined time upon application of the three phases of voltage on the lines, whereby upon application of voltage on the lines to start the motor full sine waves of voltage are coupled with the windings for said predetermined time.

12. A method as in claim 9, wherein said selectively interrupting step also interrupts the circuit path through the third line in accordance with the value of the control signal, and including the step of cyclically controlling said selectively interrupting step to vary the electrical angle of the phases of voltage which are actually coupled to the windings through two of the lines by a first amount and to vary the electrical angle of the phase of voltage which is actually coupled to the windings through the remaining lines by a different amount, whereby the motor is operated in an unbalanced condition for improved operating stability.

13. A system as in claim 9, wherein said controlling step, in response to cycles or half cycles of the voltages, controls said selectively interrupting step to sequentially and cyclically apply through the first, second and third lines, and to the windings, phases of voltage the electrical angle of which is varied by the different amount.

14. A method as in claim 9, wherein said selectively interrupting step comprises selectively interrupting the circuit path through the first line and continuously interrupting the circuit path through the second line in response to the control signal having less than a predetermined value, and inhibiting interruption of the circuit paths through the first and second lines in response to the control signal having at least said predetermined value.

15. A method as in claim 9, including the steps, in response to a sensed change in phase angle from the optimum value, of sequentially controlling the selectively interrupting step so that full phases of voltage are momentarily applied across the windings and so that the electrical angles of the phases of voltage are then incrementally varied until the sensed phase angle is again decreased to the optimum value.

Fig.1
(PRIOR ART)

*Fig.2.* (PRIOR ART)

a
LINE VOLTAGE

TRIAC TURNS
ON

b
TRIAC GATE
VOLTAGE

TRIAC TURNS
OFF

c
MOTOR VOLTAGE

d
CURRENT

e
TRIAC VOLTAGE

f  $T$

g  $\overline{T}$

h $E$

k $\overline{E}$

l

m
RAMP

n
RAMP AND
ERROR

3/11

0055856

Fig.3.

Fig.4.

Fig.5.

0055856

Fig.6.

Fig.7.

INHIBIT

PFC

PHASE
SHIFT

TIME
DELAY
CIRCUIT

ONE
SHOT
T>16ms

OR

φ1

φ2

φ3

Fig.8.

PFC
AND
MPU

SWITCH

OUT

I3

I2

I1

T1

T2

T3

V1

V2

V3

φ1

φ2

φ3

0055856

_Fig. 9._

| CYCLE (FULL OR HALF) | φ1 | φ2 | φ3 |
|---|---|---|---|
| 1 | 70° | 90° | 90° |
| 2 | 90° | 70° | 90° |
| 3 | 90° | 90° | 70° |
| ETC | | | |

_Fig. 10._

φ1

φ2

φ3

_Fig. 11._

-V

OUTPUT

φ3

0055856

Fig. 12.

Fig. 13.

Fig. 14.

Fig. 15.

Fig. 16.

Fig. 17.

8/11

0055856

Fig. 18.

Fig. 19.

Fig. 20.

Fig.21.

Fig.22.

0055856

*Fig.23.*

| CYCLE | $\phi 1$ | $\phi 2$ | $\phi 3$ |
|---|---|---|---|
| ½ | X° | O° | X° |
| 1 | X° | O° | X° |
| 1½ | O° | O° | O° |
| 2 | X° | O° | X° |
| 2½ | X° | O° | X° |
| 3 | O° | O° | O° |
| 3½ | X° | O° | X° |
| 4 | X° | O° | X° |
| ETC | | | |

*Fig.24.*

| CYCLE | $\phi 1$ | $\phi 2$ | $\phi 3$ |
|---|---|---|---|
| ½ | X° | O° | O° |
| 1 | X° | O° | X° |
| 1½ | O° | O° | X° |
| 2 | O° | O° | O° |
| 2½ | O° | O° | O° |
| 3 | X° | O° | O° |
| 3½ | X° | O° | X° |
| 4 | O° | O° | X° |
| ETC | | | |

*Fig.25.*

| CYCLE | $\phi 1$ | $\phi 2$ | $\phi 3$ |
|---|---|---|---|
| ½ | X° | O° | O° |
| 1 | X° | O° | O° |
| 1½ | O° | X° | O° |
| 2 | O° | X° | O° |
| 2½ | O° | O° | X° |
| 3 | O° | O° | X° |
| 3½ | X° | O° | O° |
| 4 | X° | O° | O° |
| ETC | | | |